# EUROPÄISCHE PATENTSCHRIFT

(11) **EP 4 428 414 B1**
(45) Veröffentlichungstag und Bekanntmachung des Hinweises auf die Patenterteilung: **15.10.2025**
(21) Anmeldenummer: 23161218.5
(22) Anmeldetag: 10.03.2023
(51) Int. Cl.: F16K 31/00, F16K 31/56, F16K 31/50, F16K 1/52, F16K 31/524

(54) **VENTILOBERTEIL FÜR SANITÄRARMATUREN**
VALVE UPPER PART FOR SANITARY FITTINGS
PARTIE SUPÉRIEURE DE SOUPAPE POUR ROBINETTERIES SANITAIRES

(43) Veröffentlichungstag der Anmeldung: 11.09.2024
(73) Patentinhaber: Flühs Drehtechnik GmbH, 58515 Lüdenscheid (DE)
(72) Erfinder: Lange, Lutz, 58511 Lüdenscheid (DE); Roicke, Stefan, 58849 Herscheid (DE)
(74) Vertreter: Patentanwälte Dörner & Kötter PartG mbB

(56) Entgegenhaltungen:
- EP-A1- 3 366 958
- DE-A1- 102012 221 043
- DE-A1- 2 856 242
- JP-A- 2019 066 007
- US-A- 4 796 860
- US-A1- 2009 146 090
- US-B2- 10 337 641
- US-B2- 8 186 647

## Beschreibung

Die Erfindung betrifft ein Ventiloberteil mit einem Kopfstück, das von einer Steuerspindel axial durchsetzt ist, über die ein in dem Kopfstück angeordneter Ventilkörper betätigbar ist und die mit einem einen Griff umfassenden Bedienteil verbunden ist, wobei der Griff relativ zum Kopfstück koaxial zur Steuerspindel verschiebbar ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Ventiloberteile der vorgenannten Art sind in den unterschiedlichsten Ausgestaltungen bekannt. So ist beispielsweise aus der EP 3 062 002 A1 ein Ventiloberteil bekannt, das ein Kopfstück aufweist, das von einer Spindel durchsetzt ist, die in dem Kopfstück formschlüssig mit einer Steuerscheibe verbunden ist, die an einer ortsfest angeordneten Einlassscheibe anliegt. Durch Drehung der Steuerscheibe gegenüber der Einlassscheibe ist eine Steuerung des Wasserdurchflusses erzielt. Zur Betätigung der Spindel ist diese an ihrer aus dem Kopfstück herausragenden Stirnseite außen als Außenvielkant ausgeführt und innen mit einem Gewindesackloch für die formschlüssige Befestigung eines Drehgriffs versehen.

Aus der EP 2 522 887 A1 ist weiterhin ein Ventiloberteil bekannt, bei dem zur Steuerung des Durchflusses eines Fluids ein Ventilkörper vorgesehen ist, der über eine Spindel innerhalb des Kopfstücks linear bewegbar ist. Hierbei ist eine Spindel drehbar in einem Kopfstück gelagert und über ein Gewinde mit einem verdrehsicher axial in dem Kopfstück geführten Ventilkörper verbunden. Eine Drehung der Spindel bewirkt so eine axiale Bewegung des Ventilkörpers innerhalb des Kopfstücks. Weitere Ausgestaltungen von Ventiloberteilen sind in der DE 10 2012 221043 A1, der JP 2019 066007 A, Der US 2009/146090 A1 sowie der EP 3 366 058 A1 beschrieben.

Bei Armaturen wird zunehmend eine Bedienung des Ventiloberteils über Drücker oder Taster gewünscht. Hierzu kommen regelmäßig elektromagnetisch betriebene Ventile zum Einsatz. Nachteilig an diesen Ventiloberteilen ist jedoch, dass die elektromagnetischen Kontakte bei der Verschraubung bzw. Verklebung des Ventiloberteils in Mitleidenschaft gezogen werden können, wodurch die Zuverlässigkeit beeinträchtigt ist. Darüber hinaus erfordern solche Ventile eine zusätzliche Spannungsquelle. Zudem ist bei diesen Ventilen in der Regel keine Mengensteuerung möglich.

Zur Überwindung dieser Nachteile wird in der EP 3 366 959 A1 ein Ventiloberteil vorgeschlagen, bei dem der Griff eine Steuerkappe aufweist ist, mit der er entlang des Kopfstücks verschiebbar ist und über die ein Steuerkolben betätigbar ist, wobei in die Mantelfläche des Kopfstücks außen eine zwei Arretierungspositionen aufweisende Kurvenbahn eingebracht ist, in die ein an der Steuerkappe angeordneter Führungsstift eingreift. Durch eine Druckbetätigung des Griffs mit der Steuerkappe ist eine geführte axiale Bewegung des Steuerkolbens erzielt, welche in wenigstens zwei Positionen, beispielsweise in den Positionen "Ventil geöffnet" und "Ventil geschlossen" arretierbar ist.

Bei dem Design von Armaturen ist oftmals eine bestimmte axiale Positionierung des Bedienteils eines Ventils mit Spindel, insbesondere eines solchen Push-Ventils gewünscht, das beispielsweise in einer Ebene mit dem diesen umgebenden ebenen Untergrund liegen soll. Derartige Gestaltungen erweisen sich in der Praxis jedoch schwierig. Bei der Montage eines solchen Ventiloberteils wird üblicherweise eine überlange Steuerspindel verwendet, die nach erfolgtem Einbau auf eine gewünschte Länge abgelängt wird. Hierzu weist die Steuerspindel regelmäßig eine Anordnung gleichmäßig beabstandeter Trennkerben auf. Ungenauigkeiten im Zuge des Einbaus des Ventiloberteils sowie der Ablängung der Steuerspindel führen häufig zu Abweichungen der axialen Position des Bedienteils nach dessen Montage, wodurch der optische Gesamteindruck der Armatur beeinträchtigt ist. Derartige Fehlpositionierungen sind häufig nur sehr aufwendig zu korrigieren.

Hier setzt die vorliegende Erfindung an. Der Erfindung liegt die Aufgabe zu Grunde, ein Ventiloberteil für Sanitärarmaturen bereitzustellen, bei dem die axiale Positionierung eines mit dessen Steuerspindel verbundenen Bedienteils vereinfacht ist. Gemäß der Erfindung wird diese Aufgabe durch ein Ventiloberteil mit den Markmalen des Patentanspruchs 1 gelöst.

Mit der Erfindung ist ein Ventiloberteil für Sanitärarmaturen bereitgestellt, bei dem die axiale Positionierung eines mit dessen Steuerspindel verbundenen Bedienteils vereinfacht ist. Dadurch, dass der Griff über ein drehfest an diesem befestigtes Adapterstück mit der Steuerspindel verbunden ist, wobei das Adapterstück ein Innengewinde aufweist, das mit einem Außengewinde der Steuerspindel oder einem mit der Steuerspindel verbundenen Bauteil im Eingriff ist und über das seine axiale Relativposition zur Steuerspindel mittels Drehung veränderbar ist, ist eine Feineinstellung der axialen Position des Griffs an der Spindel eines in einer Wand eingebauten Ventiloberteils ermöglicht. Durch eine Drehung des Griffs in einer Justierposition erfolgt eine Längsverstellung des Adapterstücks entlang des Außengewindes der Steuerspindel oder eines mit der Steuerspindel verbundenen Bauteils. Ungenauigkeiten im Zuge des Einbaus eines Ventiloberteils und der in diesem Zuge üblicherweise erfolgten bedarfsgerechten Ablängung der Steuerspindel können so durch Verstellung des Adapterstücks ausgeglichen werden.

Erfindungsgemäß weist der Griff des Bedienteils eine Stellhülse auf, in der das Adapterstück angeordnet und drehfest mit dieser verbunden ist. Dabei ist das Adapterstück in der Stellhülse des Griffs drehfest sowie längsverschieblich gehalten.

In Weiterbildung der Erfindung ist das Innengewinde des Adapterstücks mit einem an einem Steuerzylinder angeordneten Außengewinde im Eingriff, der einen Steuerkolben aufnimmt, der mit der Steuerspindel verbunden ist.

In Ausgestaltung der Erfindung ist der Griff über eine angeordnete Arretiereinrichtung in wenigstens zwei axialen Positionen festlegbar. Dabei ist die Arretiereinrichtung bevorzugt in dem Bedienteil angeordnet und umfasst den Steuerkolben, der in dem Steuerzylinder axial verschiebbar geführt ist, wobei der Steuerzylinder eine Steuerkulisse aufweist, in die ein an dem Steuerzylinder angeordnetes Eingriffsteil eingreift. Die Arretiereinrichtung wirkt hierdurch zwischen dem Steuerkolben und dem in der Stellhülse angeordneten Steuerzylinder.

In Ausgestaltung der Erfindung ist das Eingriffsteil durch eine Kugel gebildet, die in dem Steuerzylinder radial und umlaufend bewegbar geführt ist. Hierdurch ist eine durch die Kugeln indizierte Drehung des Griffs bei dessen Betätigung vermieden. Die Kugeln haben gegenüber den im Stand der Technik bekannten Führungsstifte zudem den Vorteil, dass gelegentlich auftretende Fehlfunktionen aufgrund von durch Überbelastung verformten Führungsstiften oder deren Führungen vermieden sind.

In weiterer Ausgestaltung der Erfindung weist der Griff des Bedienteils eine Stellhülse auf, in der das Adapterstück angeordnet und drehfest mit dieser verbunden ist und die bevorzugt den Steuerkolben zumindest bereichsweise umgibt. Hierdurch ist der Griff entlang des Steuerkolbens geführt, wobei die Arretiereinrichtung zwischen dem Steuerkolben und dem in der Stellhülse angeordneten Steuerzylinder wirkt. Zur radial und umlaufend bewegbaren Anordnung einer Kugel, die in die Steuerkulisse des Steuerkolbens eingreift, kann diese in einem an dem Steuerzylinder angeordneten Käfig angeordnet sein. Bevorzugt weist der Steuerkolben einen unrunden Außenquerschnitt auf und der Steuerzylinder weist einen mit diesem Außenquerschnitt korrespondierenden Innenquerschnitt auf, wodurch der Steuerkolben drehfest, jedoch verschiebbar in dem Steuerzylinder geführt ist.

In Weiterbildung der Erfindung ist zwischen dem Steuerzylinder und dem Steuerkolben eine Feder angeordnet, die gegen den Steuerzylinder vorgespannt ist. Hierdurch ist eine automatische Rückführung des mit dem Griff verbundenen Steuerzylinders entlang des Steuerkolbens nach Einwirkung einer Betätigungskraft bewirkt.

In Ausgestaltung der Erfindung ist das Adapterstück in der Stellhülse des Griffs drehfest sowie längsverschieblich gehalten. Vorzugsweise weist die Stellhülse eine Innenverzahnung auf, die in eine an dem Steuerkolben angeordnete Außenverzahnung eingreift, wodurch der Griff axial entlang dem Steuerkolben verschiebbar geführt ist. Hierdurch ist eine drehfeste Verbindung der Stellhülse mit dem Steuerkolben bei gleichzeitiger axialer Verschiebbarkeit erzielt.

Erfindungsgemäß weist das Adapterstück Rastnasen auf, wobei innen in der Stellhülse wenigstens eine Rastnut angeordnet ist, mit der die Rastnasen in einer definierten Position des Adapterstücks verrastbar sind. Hierdurch ist eine definierte axiale Positionierung des Adapterstücks in der Stellhülse ermöglicht, in der kein Eingriff ihrer Innenverzahnung in die Außenverzahnung des Steuerkolbens besteht (Justierposition).

Bevorzugt sind innen in der Stellhülse axial beabstandet zueinander wenigstens zwei Rastnuten vorzugsweise radial umlaufend angeordnet. Hierdurch ist eine erste axiale Positionierung des Adapterstücks für die Justierung und eine zweite definierte Positionierung des Adapterstücks in Betriebsposition mit Eingriff ihrer Innenverzahnung in die Außenverzahnung des Steuerkolbens ermöglicht.

In Weiterbildung der Erfindung weist die Steuerspindel einen unrunden Anschlussabschnitt aufweist, wobei an dem Steuerkolben eine Aufnahme zur formschlüssigen Verbindung mit diesem unrunden Anschlussabschnitt angeordnet ist, der mit der Steuerspindel vorzugsweise lösbar verbunden ist. Alternativ können die Aufnahme und der Anschlussabschnitt auch zylindrisch ausgebildet und miteinander verklebt oder über sonstige Verbindungsmittel verbunden sein. Hierdurch ist eine Übertragung eines Drehmoments von dem Griff auf den Steuerkolben und der mit diesem verbundenen Steuerspindel ermöglicht. Durch Drücken auf den Griff kann dieser über die Arretiereinrichtung aus einer versenkten Position herausbewegt werden, wonach durch Drehen an dem Griff eine Betätigung des Ventiloberteils erfolgen kann.

Bei einer Ausführungsform, bei der sowohl die durch das Adapterstück gebildete Justiereinrichtung, als auch die Arretiereinrichtung in dem Bedienteil angeordnet ist, deren Steuerkolben lösbar mit der Steuerspindel verbindbar ist, ist ein einfacher Austausch der Bedieneinrichtung sowie eine einfache Nachrüstung eines Ventiloberteils mit einer solchen Bedieneinrichtung ermöglicht.

Die einzige Voraussetzung ist, dass das betreffende Ventiloberteil eine Spindel aufweist, durch dessen Drehung eine Betätigung eines Ventilkörpers erfolgt.

In weiterer Ausgestaltung der Erfindung ist eine Einbauhülse angeordnet, deren Innendurchmesser im Wesentlichen dem Außendurchmesser des Griffs des Bedienteils entspricht, wobei die Position des Griffs in einem definierten Abstand zur Einbauhülse einstellbar ist. Vorzugsweise weist die Einbauhülse einen umlaufenden Kragen auf, der bei Positionierung des Griffs in einer definierten Position in der Einbauhülse mit der Oberfläche des Griffs eine gemeinsame Ebene ausbildet. Hierdurch ist eine optisch ansprechende Integration des Griffs in eine diese umgebene Ebene ermöglicht. Der Kragen kann sowohl ringförmig als auch in Form einer Platte jedweder geometrischen Form ausgebildet sein Gegenstand der vorliegenden Erfindung ist weiterhin eine Sanitärarmatur mit einem Ventiloberteil für Sanitärarmaturen nach einem der Patentansprüche 1 bis 10.

Unter der Justierposition ist vorliegend die Stellung des Griffs zu verstehen, in der die Rastnasen des Adapterstücks in die zweite, untere Rastnut der Stellhülse eingreift. In dieser Position ist eine Justierung über den Gewindeeingriff zwischen dem Außengewinde des Steuerzylinders und dem Innengewinde des Adapterstücks ermöglicht. Die Innenverzahnung der Stellhülse ist außer Eingriff mit der Außenverzahnung des Steuerkolbens.

Unter der Betriebsposition ist vorliegend die Stellung des Griffs zu verstehen, in der die Rastnasen des Adapterstücks in die erste, obere Rastnut der Stellhülse eingreift. In dieser Position ist die Innenverzahnung der Stellhülse im Eingriff mit der Außenverzahnung des Steuerkolbens. Eine Justierung über den Gewindeeingriff zwischen dem Außengewinde des Steuerzylinders und dem Innengewinde des Adapterstücks ist nicht möglich.

Unter der Bedienposition ist vorliegend die Stellung des Griffs zu verstehen, in der die Kugeln in der oberen Position der Steuerkulisse anliegen. Der Griff ist so zur einfachen Bedienung "ausgefahren".

Unter der eingefahrenen Position ist vorliegend die Stellung des Griffs zu verstehen, in der die Kugeln im Haltebereich der Steuerkulisse anliegen. Der Griff ist hier in einer eingefahrenen Position arretiert, in der beispielsweise der Griff bündig mit einer diesen Griff einfassenden Umgebung ist.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die schematische Darstellung eines Ventiloberteils mit einer Bedieneinrichtung nach einer Grobmontage mit Griff in Bedienposition;
- Figur 2:: die schematische Darstellung des Ventiloberteils mit Bedieneinrichtung nach Figur 1 mit Griff in Justierposition (vor erfolgter Justierung);
- Figur 3:: die schematische Darstellung des Ventiloberteils mit Bedieneinrichtung nach Figur 2 nach erfolgter Justierung des Griffs;
- Figur 4:: die schematische Darstellung des Ventiloberteils mit Bedieneinrichtung nach Figur 3 mit Griff in Betriebsposition;

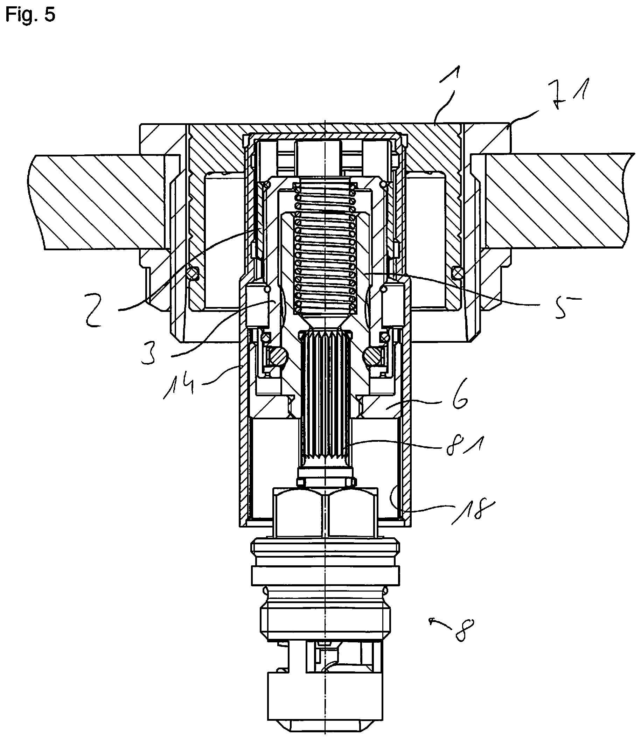

- Figur 5:: die Darstellung des Ventiloberteils mit Bedieneinrichtung aus Figur 4 mit Griff in eingefahrener Position;

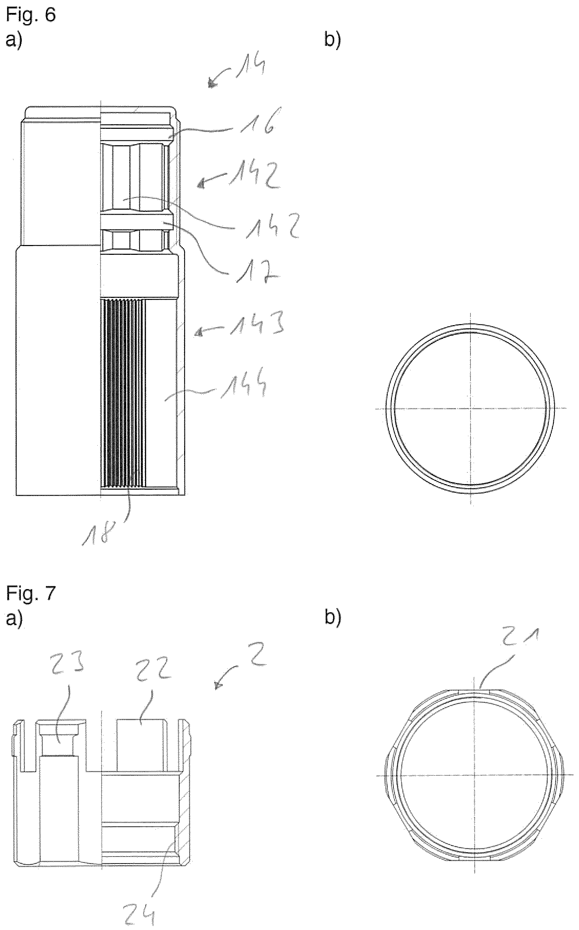

- Figur 6:: die schematische Darstellung der Stellhülse des Griffs der Bedieneinrichtung aus Figur 1
a) im Teilschnitt,
b) in der Draufsicht;
- Figur 7:: die schematische Darstellung des Adapterstücks der Bedieneinrichtung aus Figur 1
a) im Teilschnitt,
b) in der Draufsicht;

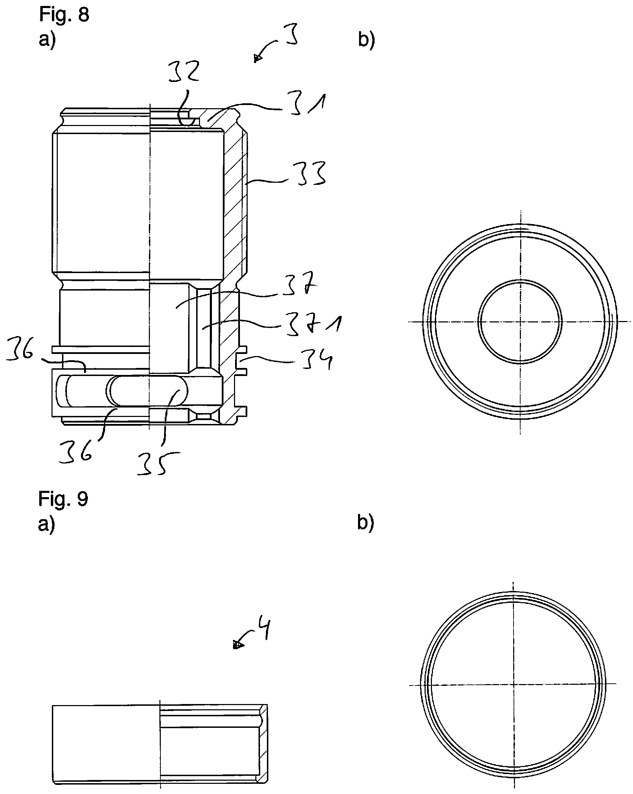

- Figur 8:: die schematische Darstellung des Steuerzylinders der Bedieneinrichtung aus Figur 1
a) im Teilschnitt,
b) in der Draufsicht;
- Figur 9:: die schematische Darstellung der Begrenzungshülse des Steuerzylinders der Bedieneinrichtung aus Figur 1
a) im Teilschnitt,
b) in der Draufsicht;

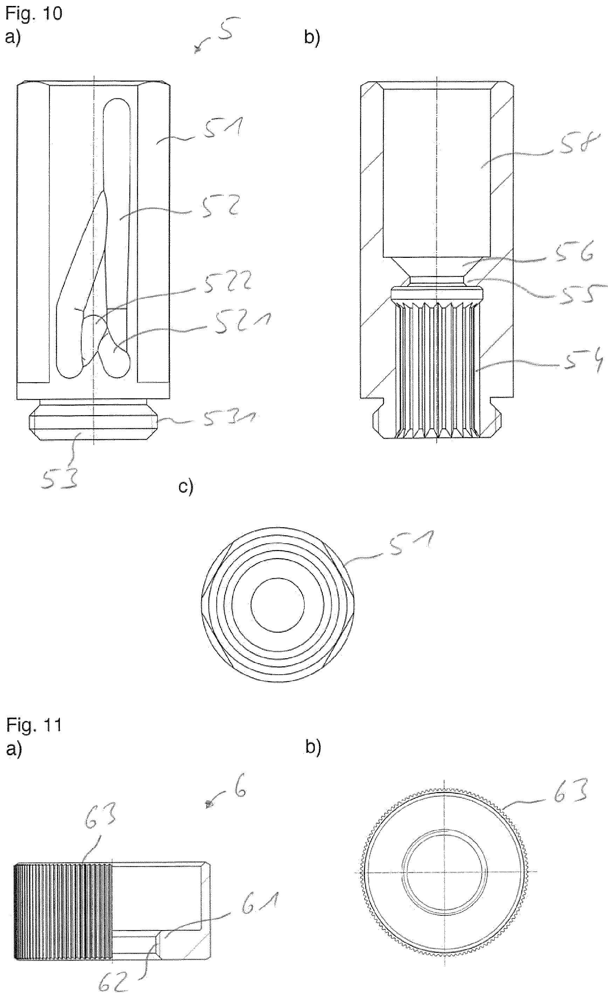

- Figur 10:: die schematische Darstellung des Steuerkolbens der Bedieneinrichtung aus Figur 1
a) in der Seitenansicht;
b) im Längsschnitt;
c) in der Draufsicht;
- Figur 11:: die schematische Darstellung des Mitnehmerstücks des Steuerkolbens der Bedieneinrichtung aus Figur 1
a) im Teilschnitt,
b) in der Draufsicht.
- Figur 12:: die schematische Darstellung der Bedieneinrichtung (ohne Griff) aus Figur 3 in Bedienposition
- Figur 13:: die Detaildarstellung des Kugelkäfigs der Bedieneinrichtung aus Figur 12;
- Figur 14:: die Darstellung der Bedieneinrichtung aus Figur 12 mit erhöhter Zuglast am Steuerzylinder;
- Figur 15:: die Detaildarstellung des Kugelkäfigs der Bedieneinrichtung aus Figur 14;
- Figur 16:: die schematische Darstellung eines Ventiloberteils in einer weiteren Ausführungsform mit Bedieneinrichtung in Justierposition und
- Figur 17:: die schematische Darstellung des Ventiloberteils mit Bedieneinrichtung nach Figur 16 nach erfolgter Justierung des Griffs in Bedienposition.

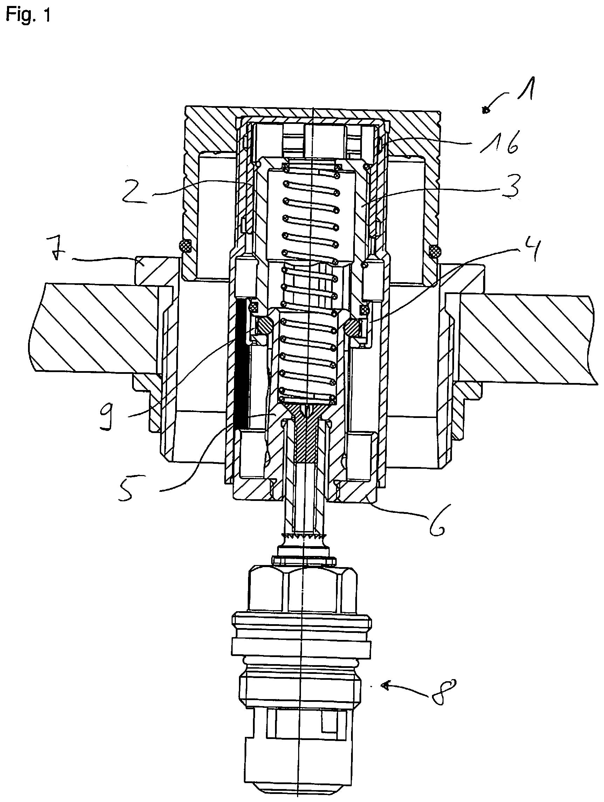

Die als Ausführungsbeispiel gemäß Figur 1 gewählte Ventiloberteil 8 ist gemäß der EP 1 696 162 A1 ausgebildet und weist ein Kopfstück 83 auf, dass von einer Steuerspindel 81 axial durchsetzt ist, durch die ein - nicht dargestellter - Ventilkörper betätigbar ist. Endseitig ist an der Steuerspindel 81 eine Bedieneinrichtung angeordnet, die einen Griff 1 umfasst, in dem ein Adapterstück 2 axial verschiebbar angeordnet ist, das einen Steuerzylinder 3 aufnimmt, mit dem es im Gewindeeingriff ist, der endseitig mit einer Begrenzungshülse 4 versehen ist und in dem ein Steuerkolben 5 axial verschiebbar angeordnet ist, der endseitig mit einem Mitnehmerstück 6 versehen ist und der eine Aufnahme zur formschlüssigen Verbindung mit dem unrunden Anschlussabschnitt 82 der Steuerspindel 81 eines Ventiloberteils 8 aufweist. Alternativ kann der Anschlussabschnitt der Steuerspindel 81 auch zylindrisch ausgebildet sein. In diesem Fall ist eine drehfeste Verbindung beispielsweise mittels Kleben erforderlich.

Der Griff 1 ist aus einem hohlzylindrischen, topfförmig ausgebildeten Griffstück 11 gebildet, das innen zentrisch eine Gewindebohrung 12 aufweist, in die koaxial zur zylindrischen Seitenwand des Griffstücks 11 eine Stellhülse 14 eingeschraubt und verklebt ist. Alternativ kann der Griff 1 auch einteilig ausgeführt sein. Außen ist das Griffstück 11 mit einer Dichtungsnut 13 versehen, die einen O-Ring 131 aufnimmt. Griffstück 11 und Stellhülse 12 sind im Ausführungsbeispiel als Messingdrehteile hergestellt.

Die Stellhülse 14 ist im Wesentlichen hohlzylindrisch ausgebildet und weist einen ersten Abschnitt 141 auf, an den sich ein zweiter, durchmessererweitertet Abschnitt 143 anschließt. Der erste Abschnitt 141 ist außen mit einem Außengewinde 15 versehen, mit dem die Stellhülse in 14 in die Gewindebohrung 12 des Griffstücks 11 eingeschraubt und verklebt ist. In seine einen weitgehend zwölfeckförmigen Querschnitt aufweisende Innenmantelfläche sind in dem ersten Abschnitt 141 eine erste, obere Rastnut 16 und beabstandet zu dieser eine zweite, untere Rastnut 17 angeordnet. Die weitgehend zwölfeckförmige Querschnittskontur der Innenmantelfläche des ersten Abschnitts 141 dient der drehfesten Aufnahme des Adapterstücks 2, dessen Außenmantelfläche eine hierzu korrespondierende zwölfeckförmige Querschnittskontur aufweist. Die weitgehend zwölfeckförmige Querschnittskontur der Innenmantelfläche des ersten Abschnitts 141 sowie der Außenmantelfläche des Adapterstücks 2 ist durch sechs regelmäßig beabstandet in die Zylindermantelfläche eingebrachte rechteckige Abflachungen 142, 21 erzielt.

Alternativ kann an Stelle der zwölfeckförmigen Querschnittskontur auch jedwede andere unrunde, vorzugsweise vieleckige Kontur verwendet werden. Der zweite Abschnitt 143 ist mit einer Innenverzahnung 18 versehen, die sich weitgehend über die gesamte Innenmantelfläche des zweiten Abschnitts 143 erstreckt. Die Innenmantelfläche des zweiten Abschnitts 143 weist eine weitgehend achteckförmige Querschnittskontur auf, die durch vier regelmäßig beabstandet in die mit der Innenverzahnung 18 versehene Zylinderinnenmantelfläche eingebrachte rechteckige Abflachungen 144 erzielt ist.

Das Adapterstück 2 ist im Wesentlichen hohlzylindrisch ausgebildet und weist, wie bereits ausgeführt, eine mit der Innenmantelfläche der Stellhülse 14 korrespondierende Außenmantelfläche mit nahezu zwölfeckförmigem Querschnitt auf. Im Bereich einer jeden Abflachung 21 ist in das Adapterstück 2 an seinem der Gewindebohrung 12 des Griffstücks 11 zugewandten Seite jeweils eine rechteckige Ausnehmung eingebracht, wodurch umlaufend sechs regelmäßig beabstandet zueinander angeordnete Rastzungen 22 begrenzt sind, die radial verlaufende, nach außen kragende Rastnasen 23 zum Eingriff in die Rastnuten 16, 17 der Stellhülse 14 aufweisen. Auf seiner Innenmantelfläche ist das Adapterstück 2 mit einem Innengewinde 24 versehen. Im Ausführungsbeispiel ist das Adapterstück 2 aus Kunststoff hergestellt.

Der Steuerzylinder 3 ist als im Wesentlichen hohlzylindrisches Messingdrehteil ausgebildet. An seiner dem Adapterstück 2 zugewandten Stirnseite weist der Steuerzylinder 3 einen innendurchmesserverjüngenden Absatz 31 auf, in den innen eine Stufe 32 eingebracht ist. Außen weist der Steuerzylinder 3 ein Außengewinde 33 auf, das sich etwa über die Hälfe seiner Länge erstreckt. Beabstandet zu dem Außengewinde 33 ist eine Nut 34 zur Aufnahme eines O-rings 341 angeordnet. An die Nut 34 schließen sich zwei diametral gegenüberliegende, radial sich erstreckende Langlochbohrungen 35 an, die von zwei axial beabstandet angeordneten, umlaufenden Stegen 36 eingefasst sind. Zwischen den Langlochbohrungen 35 und dem Außengewinde 33 weist der Steuerzylinder 3 innen einen durchmesserverjüngenden Absatz 37 auf, in den umlaufend radial beabstandet vier Führungskerben 371 eingebracht sind. Die Führungskerben 371 dienen der drehfesten Führung des Steuerkolbens 4.

In die beiden Langlochbohrungen 35 ist jeweils eine Kugel 38 eingebracht, deren Durchmesser etwas kleiner ist, als die Breite der Langlochbohrung 35, so dass diese bereichsweise durch die jeweilige Langlochbohrung 35 hindurchragt und zwischen den Stegen 36 radial und umlaufend beweglich geführt ist. An seinem die Langlochbohrungen 35 aufweisenden endseitigen Abschnitt ist auf dem Steuerzylinder 3 eine Begrenzungshülse 4 vorhanden, in der eine Ringfeder 9 angeordnet ist. Die Begrenzungshülse 4 umgreift die Stege 36 und ist durch einen O-Ring 341 gehalten. Die Begrenzungshülse 4 bildet mit den Stegen 36, der Ringfeder 9 und den Langlochbohrungen 35 einen Kugelkäfig für die beiden Kugeln 38 aus, durch den ihre Bewegung in radialer Richtung begrenzt ist.

Der Steuerkolben 5 ist als im Wesentlichen zylindrisches Messingdrehteil ausgebildet. In seine zylindrische Außenmantelfläche sind radial beabstandet zueinander vier Abflachungen 51 eingebracht, wodurch ein im Wesentlichen achteckförmiger Querschnitt gebildet ist. Über die so gebildeten Ecken ist der Steuerkolben 5 in den Führungskerben 371 des Steuerzylinders 3 geführt. Jeweils zwischen zwei Abflachungen 51 sind in die Außenmantelfläche weiterhin diametral gegenüberliegend zwei Steuerkulissen 52 eingebracht. An seinem dem Steuerzylinder 3 abgewandten Ende ist ein durchmesserreduzierter Absatz 53 angeordnet, der ein Außengewinde 531 aufweist. Durch den Absatz 53 hindurch erstreckt sich eine in Form eines Innenvielecks ausgebildete Aufnahme 54 für die ein Außenvieleck aufweisende Steuerspindel 81 eines Ventiloberteils 8. An die Aufnahme 54 schließt sich ein innendurchmesserverjüngter Abschnitt 55 an, in den zentrisch eine Kegelbohrung 56 zur Aufnahme des Kopfes einer Senkkopfschraube 82 eingebracht ist. An den innendurchmesserverjüngten Abschnitt 55 schließt sich ein innendurchmessererweiterter Abschnitt 58 an, durch den ein Absatz 57 gebildet ist, der als Federsitz für eine Druckfeder 59 dient.

Das Mitnehmerstück 6 ist als im Wesentlichen hohlzylindrisches Messingdrehteil ausgebildet und weist an seinem dem Steuerzylinder 3 entgegengesetzten Ende einen innendurchmesserverjüngten Abschnitt 61 auf, der mit einem Innengewinde 62 versehen ist. Die Außenmantelfläche des Mitnehmerstücks 6 ist mit einer Außenverzahnung 63 zum Eingriff in die Innenverzahnung 18 der Stellhülse 14 versehen.

Das Adapterstück 2 ist mit seinem Innengewinde 24 auf das Außengewinde 33 des Steuerzylinders 3 geschraubt. In den Steuerzylinder 3 ist der Steuerkolben 5 eingesetzt, der durch seine mit der Innenmantelfläche des Steuerzylinders 3 korrespondierend ausgebildete unrunde Außenmantelfläche in dem Steuerzylinder 3 drehfest, jedoch axial verschiebbar geführt ist. Die durch die Langlochbohrungen 35 des Steuerzylinders 3 bereichsweise hindurchtretenden Kugeln 38 greifen dabei jeweils in eine Steuerkulisse 52 des Steuerkolbens 5 ein. An dem Absatz 57 des Steuerkolbens 5 liegt die Druckfeder 59 an, die auf ihrer gegenüberliegenden Seite gegen die Stellhülse vorgespannt ist.

In Betriebsposition des Griffs 1 mit seiner Stellhülse 14, in der die Rastnasen 23 der Rastzungen 22 des auf diesem aufgeschraubten Adapterstücks 2 in die obere, erste Rastnut 16 der Stellhülse 14 eingreifen, ist die Innenverzahnung der Stellhülse 14 mit der Außenverzahnung 63 des Mitnehmerstücks 6 im Eingriff. In dieser Betriebsposition ist eine Übertragung eines Drehmoments von dem Griff 1 auf das mit der Steuerspindel 81 des Ventiloberteils 8 verbundenen Mitnehmerstücks 6 ermöglicht. Das Ventiloberteil 8 ist im Ausführungsbeispiel gemäß der EP 1 696 162 A1 ausgebildet. Es weist eine Kopfstück 83 auf, das von der Steuerspindel 81 axial durchsetzt ist.

Bei der wandseitigen Montage einer Sanitärarmatur, beispielsweise einer Duscharmatur, werden die Wasserleitungen von dem Installateur in der Wand an ein Ventiloberteil 8 der Armatur angeschlossen. Das Ventiloberteil 8 weist regelmäßig eine lange Steuerspindel 81 auf, die nach Fertigstellung der wandseitigen Arbeiten, einschließlich möglicher Fliesenarbeiten, auf ein gewünschtes Maß abgelängt werden. Die Steuerspindel 81 einrahmend ist der Wanddurchtritt mit einer Einbauhülse 7 versehen. Die Steuerspindel 81 wird mit ihrer Außenverzahnung in die eine Innenverzahnung aufweisende Aufnahme 54 des Steuerkolbens 5 eingeführt und über eine Senkkopfschraube 82 befestigt. Eine solche Einbausituation ist in Figur 1 schematisch dargestellt. Aufgrund von Ungenauigkeiten beim Einbau des Ventiloberteils 8 und dem Ablängen der Steuerspindel 81 ragt das Griffstück 11 des Griffs 1 deutlich über den Kragen 71 der Einbauhülse 7 hinaus, die in diesem Ausführungsbeispiel ein Außengewinde 72 aufweist, das mit einer Kontermutter 73 verschraubt ist.

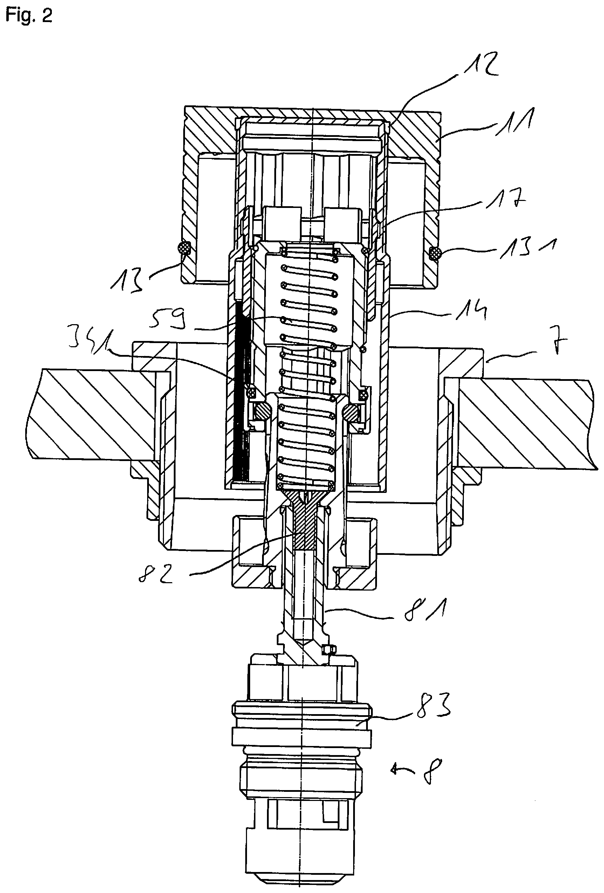

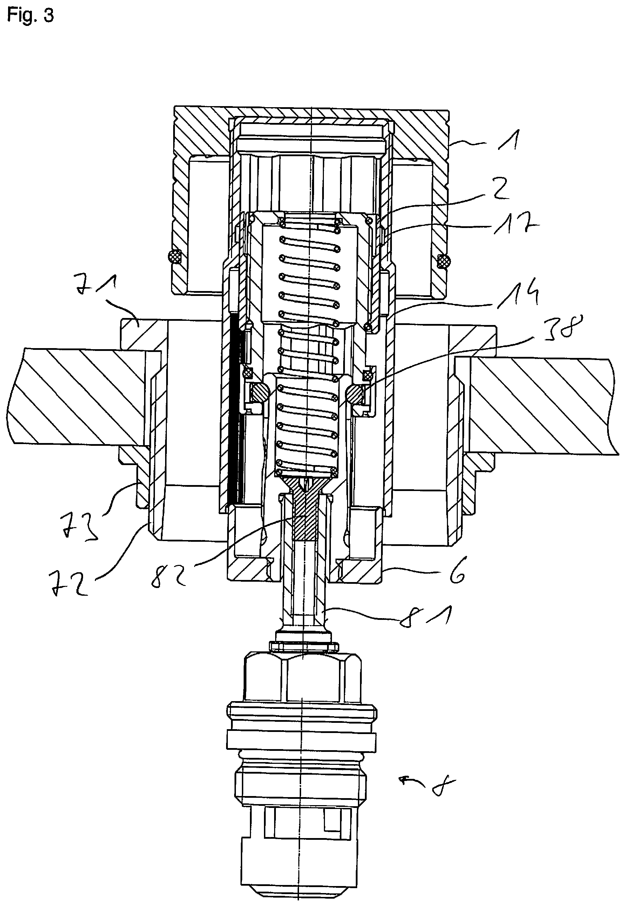

Der Griff 1 kann nun mit seiner längsverschieblich mit dem Adapterstück 2 verbundenen Stellhülse 14 durch Ziehen an dem Griffstück 11 auf dem Adapterstück 2 verschoben werden, bis die Rastnasen 23 der Rastzungen 22 in die zweite, untere Rastnut 17 der Stellhülse 14 einrasten. In dieser Position ist die Innenverzahnung 18 der Stellhülse 14 außer Eingriff mit der Außenverzahnung 63 des Mitnehmerstücks 6 (vgl. Figur 2). Durch Drehen an dem Griffstück 11 kann nun das drehfest mit der Stellhülse 14 verbundene Adapterstück 2 über den Gewindeeingriff mit dem Außengewinde 33 des Steuerzylinders 3 axial relativ zu diesem verstellt werden (vgl. Figur 3).

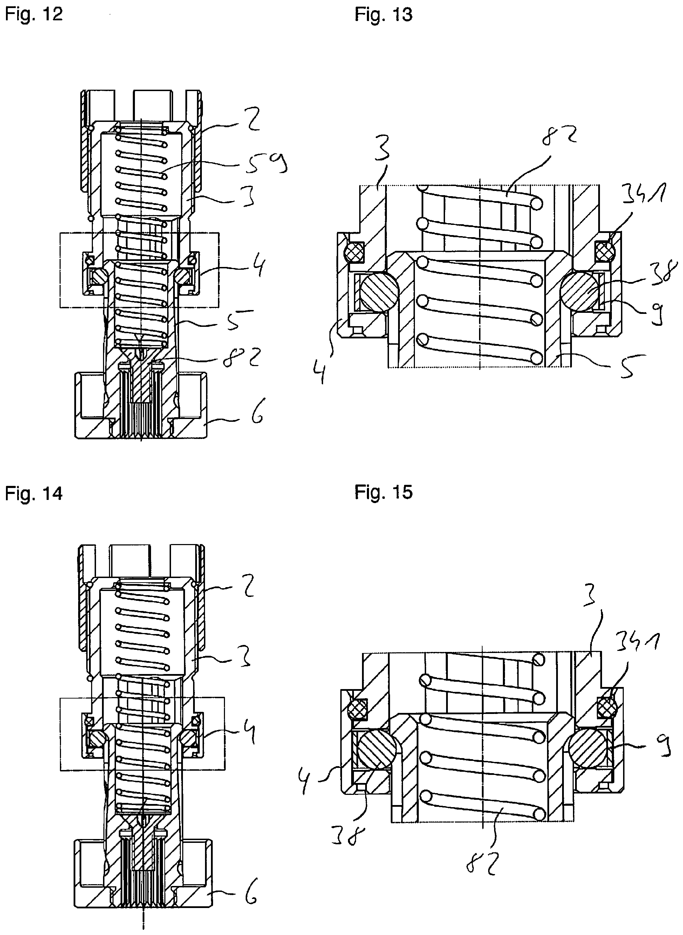

Bei der Umstellung des Griffs 1 mit seiner Stellhülse 14 aus der Betriebsposition in die Justierposition ist zum Ausbringen der Rastnasen 23 der Rastzungen 22 aus der ersten, oberen Rastnut 16 eine Zugkraft erforderlich, um die Rastnasen 23 in die zweite, untere Rastnut 17 zu verbringen. Durch diese Zugkraft wird zugleich eine Zugkraft zwischen Steuerzylinder 3 und Steuerkolben erzeugt, wodurch die an in der Steuerkulisse 52 des Steuerkolbens 5 geführten Kugeln 38 radial nach außen gegen die Ringfeder 9 gedrückt werden. Durch die Begrenzungshülse 4 ist ein Austreten der Kugeln 38 aus der Steuerkulisse 52 verhindert (vgl. Figuren 13 und 15).

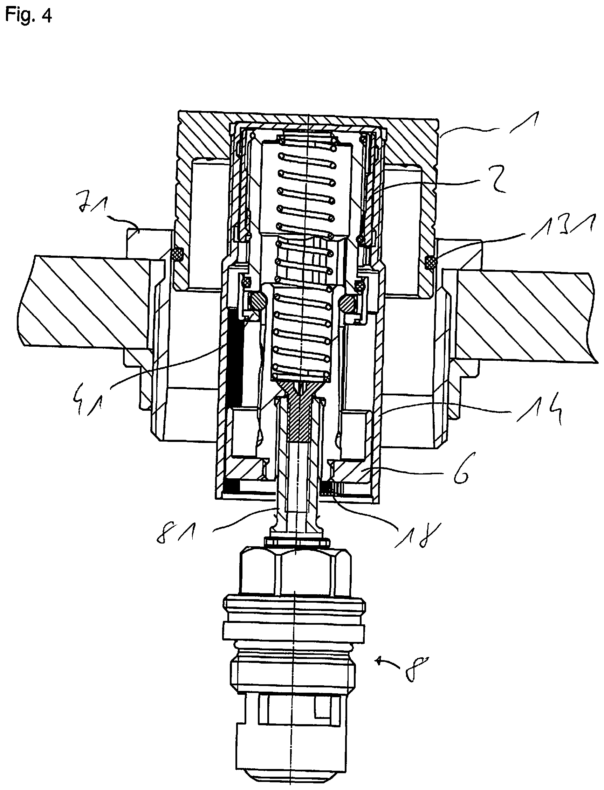

Nachfolgend kann die Stellhülse 14 durch Druck auf das Griffstück 11 wieder entlang des Adapterstücks 2 verschoben werden, bis die Rastnasen 23 der Rastzungen 22 in die erste, obere Rastnut 16 der Stellhülse 14 einrasten. Die Bedieneinheit ist nun gegenüber der Einbauhülse 7 justiert. Sie befindet sich in der Betriebsposition (vgl. Figur 4).

Durch Drücken des Griffs 1 wird der Steuerzylinder 3 über die Stellhülse 14 entlang des Steuerkolbens 5 bewegt, wobei die Kugeln 38 in der Steuerkulisse 52 laufen. Hierbei können sich die Kugeln 38 in den Langlochbohrungen 35 radial bewegen. Am Anschlag des Steuerkolbens 5 in dem Steuerzylinder 3 erreichen die Kugeln 38 den Umschaltabschnitt 521 der jeweiligen Steuerkurve 52. Nach Loslassen des Griffs 1 wird der Steuerzylinder 3 durch die Rückstellkraft der Druckfeder 59 zurückbewegt, wodurch die Kugeln 38 in den Haltebereich 522 der Steuerkulisse 52 bewegt werden. In dieser Stellung ist der Griff 1 durch die Kugeln 38 gehalten. In dieser Position ist der Griff 1 vollständig in die Einbauhülse 7 versenkt in der eingefahrenen Position, wobei die Oberflächen von Griff 1 und Kragen 71 der Einbauhülse 7 auf einer Ebene liegen.

Bei erneutem Drücken des Griffs 1 werden die Kugeln 38 aus dem Haltebereich 522 der Steuerkulisse 52 herausbewegt. Nach Loslassen des Griffs 1 wird der Steuerzylinder 3 durch die Rückstellkraft der Druckfeder 59 nun vollständig zurückbewegt. In dieser Bedienposition ragt der Griff weit aus der Einbauhülse 7 hinaus. Durch den Eingriff der Innenverzahnung 18 der Stellhülse 14 mit der Außenverzahnung 63 des Mitnehmerstücks 6, das über den Steuerkolben 5 mit der Steuerspindel 81 des Ventiloberteils 8 verbunden ist, kann nun eine Betätigung des Ventiloberteils 8 durch eine Drehung der Steuerspindel 81 über den Griff 1 erfolgen. Nach erfolgter Betätigung des Ventiloberteils 8 kann durch erneutes Drücken des Griffs 1 dieser wieder in der Einbauhülse versenkt werden.

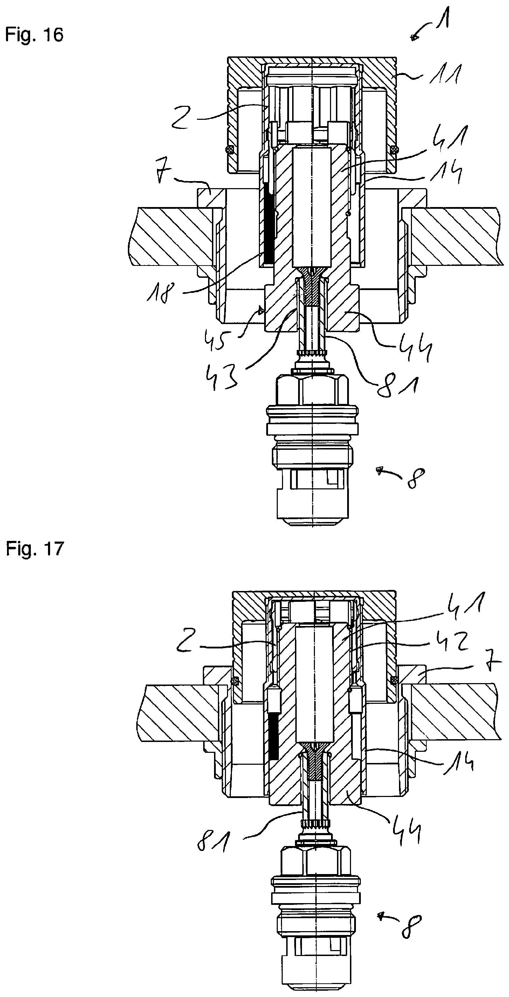

In Figur 16 ist ein Ventiloberteil in einer weiteren Ausführungsform gezeigt, bei der keine Arretierungseinrichtung vorhanden ist. An der Steuerspindel 81 ist endseitig eine Bedieneinrichtung angeordnet, die wiederum einen Griff 1 umfasst, der ein Griffstück 11 und eine mit diesem verbundene Stellhülse 14 aufweist und in dem ein Adapterstück 2 in der zuvor beschriebenen Art axial verschiebbar angeordnet ist. Das Adapterstück nimmt hier jedoch einen Kopplungszylinder 41 auf, wobei das Adapterstück 2 mit seinem Innengewinde 24 auf das Außengewinde 42 des Kopplungszylinders 41 geschraubt ist.

Der Kopplungszylinder 41 weist eine Aufnahme 43 zur formschlüssigen Verbindung mit dem unrunden Anschlussabschnitt 82 der Steuerspindel 81 des Ventiloberteils 8 auf. An seinem dem Ventiloberteil 8 zugewandten Ende weist der Kopplungszylinder 41 eine durchmesservergrößerten Mitnehmerabsatz 44 auf, der außen umlaufend - entsprechend der Außenverzahnung 63 des Mitnehmerstücks 6 der zuvor beschriebenen Ausführungsbeispiels - mit einer Außenverzahnung 45 zum Eingriff in die Innenverzahnung 18 der Stellhülse 14 des Griffs 1 versehen ist.

Der Griff kann nun entsprechend dem ersten Ausführungsbeispiels durch Ziehen an dem Griffstück 11 auf dem Adapterstück 2 verschoben werden, bis die Rastnasen 23 der Rastzungen 22 in die zweite, untere Rastnut 17 der Stellhülse 14 einrasten. In dieser Position ist die Innenverzahnung 18 der Stellhülse 14 außer Eingriff mit der Außenverzahnung 45 des Mitnehmerabsatzes 44 (vgl. Figur 16). Durch Drehen an dem Griffstück 11 kann nun das drehfest mit der Stellhülse 14 verbundene Adapterstück 2 über den Gewindeeingriff mit dem Außengewinde 42 des Kopplungszylinders 1 axial relativ zu diesem verstellt werden.

Nachfolgend kann die Stellhülse 14 durch Druck auf das Griffstück 11 wieder entlang des Adapterstücks 2 verschoben werden, bis die Rastnasen 23 der Rastzungen 22 in die erste, obere Rastnut 16 der Stellhülse 14 einrasten. Die Bedieneinheit ist nun gegenüber der Einbauhülse 7 justiert. Die Außenverzahnung 45 des Mitnehmerabsatzes 44 ist nun wieder im Eingriff mit der Innenverzahnung 18 der Stellhülse 14, der Gewindeeingriff zwischen dem Adapterstück 2 und der Stellhülse 14 ist blockiert. Über den Griff 1 kann ein Drehmoment auf die Steuerspindel 81 übertragen werden. Die Bedieneinrichtung befindet sich in der Betriebsposition (vgl. Figur 17).

Selbstverständlich kann die Blockierung des Gewindeeingriffs zwischen dem Adapterstück 2 und der Stellhülse 14 auch über in dem Griff angeordnete Feststellmittel erfolgen, beispielsweise über eine Axialverschiebung der Stellhülse, wodurch die Gewinde von Adapterstück und Stellhülse außer Eingriff bringbar ist. Hierzu ist das Adapterstück vorzugsweise aus Kunststoff ausgebildet, wodurch ein axiales Überfahren des Gewindes der Stellhülse ermöglicht ist. Alternativ ist auch das Vorsehen eines von außen eindrückbaren Blockierstiftes denkbar, der in einen Gewindegang eingreift.

## Patentansprüche

1. Ventiloberteil mit einem Kopfstück, das von einer Steuerspindel (81) axial durchsetzt ist, über die ein in dem Kopfstück (83) angeordneter Ventilkörper betätigbar ist und die mit einem einen Griff (1) umfassenden Bedienteil verbunden ist, wobei der Griff (1) relativ zum Kopfstück (83) koaxial zur Steuerspindel (81) verschiebbar ist, wobei der Griff (1) über ein drehfest an diesem befestigtes Adapterstück (2) mit der Steuerspindel (81) verbunden ist, wobei das Adapterstück (2) ein Innengewinde (24) aufweist, das mit einem Außengewinde der Steuerspindel oder einem mit der Steuerspindel (81) verbundenen Bauteil im Eingriff ist und über das seine axiale Relativposition zur Steuerspindel (81) mittels Drehung veränderbar ist, **dadurch gekennzeichnet, dass** der Griff (1) des Bedienteils eine Stellhülse (14) aufweist, in der das Adapterstück (2) angeordnet und drehfest mit dieser verbunden ist, wobei das Adapterstück (2) in der Stellhülse (14) des Griffs (1) drehfest sowie längsverschieblich gehalten ist und wobei das Adapterstück (2) Rastnasen (23) aufweist, wobei innen in der Stellhülse (14) wenigstens eine Rastnut (16, 17) angeordnet ist, mit der die Rastnasen (23) in einer definierten Position des Adapterstücks (2) in der Stellhülse (14) verrastbar sind.

2. Ventiloberteil nach Anspruch 1, **dadurch gekennzeichnet, dass**, wenn das Außengewinde (33) mit einem der Steuerspindel (81) verbundenen Bauteil im Eingriff ist, das Innengewinde (24) des Adapterstücks (2) mit einem an einem Steuerzylinder (3) angeordneten Außengewinde (33) im Eingriff ist, der einen Steuerkolben (5) aufnimmt, der mit der Steuerspindel (81) verbunden ist.

3. Ventiloberteil nach einem der vorgenannten Ansprüche, **dadurch gekennzeichnet, dass** der Griff über eine angeordnete Arretiereinrichtung in wenigstens zwei axialen Positionen festlegbar ist.

4. Ventiloberteil nach den Ansprüchen 2 und 3, **dadurch gekennzeichnet, dass** die Arretiereinrichtung in dem Bedienteil angeordnet ist und den Steuerkolben (5) umfasst, der in dem Steuerzylinder (3) axial verschiebbar geführt ist, wobei der Steuerzylinder (3) eine Steuerkulisse (52) aufweist, in die ein an dem Steuerzylinder (3) angeordnetes Eingriffsteil eingreift.

5. Ventiloberteil nach Anspruch 4, **dadurch gekennzeichnet, dass** das Eingriffsteil durch eine Kugel (38) gebildet ist, die in dem Steuerzylinder (3) radial bewegbar geführt ist.

6. Ventiloberteil nach einem der Ansprüche 2, 4 oder 5, oder Anspruch 3 wenn dieser von Anspruch 2 abhängig ist, **dadurch gekennzeichnet, dass** die Stellhülse (14) den Steuerkolben (5) zumindest bereichsweise umgibt.

7. Ventiloberteil nach einem der Ansprüche 2, 4, 5 oder 6, oder Anspruch 3 wenn dieser von Anspruch 2 abhängig ist, **dadurch gekennzeichnet, dass** zwischen dem Steuerzylinder (3) und dem Steuerkolben (5) eine Feder (59) angeordnet ist, die gegen den Steuerzylinder (3) vorgespannt ist.

8. Ventiloberteil nach Anspruch 2, 4, 5, 6 oder 7, oder Anspruch 3 wenn dieser von Anspruch 2 abhängig ist, **dadurch gekennzeichnet, dass** die Stellhülse (14) eine Innenverzahnung (18) aufweist, die in eine an dem Steuerkolben (5) angeordnete Außenverzahnung (63) eingreift, wodurch der Griff (1) axial entlang dem Steuerkolben (5) verschiebbar geführt ist.

9. Ventiloberteil nach einem der vorgenannten Ansprüche, **dadurch gekennzeichnet, dass** innen in der Stellhülse (14) axial beabstandet zueinander zwei Rastnuten (16, 17) vorzugsweise radial umlaufend angeordnet sind.

10. Ventiloberteil nach einem der Ansprüche 2, 4, 5, 6, 7 oder 8, oder Anspruch 3 wenn dieser von Anspruch 2 abhängig ist, oder Anspruch 9 wenn dieser von zumindest einem der Ansprüche 2, 4, 5, 6, 7 oder 8 abhängig ist, **dadurch gekennzeichnet, dass** die Steuerspindel (81) einen unrunden Anschlussabschnitt aufweist, wobei an dem Steuerkolben (5) eine Aufnahme (54) zur formschlüssigen Verbindung mit diesem unrunden Anschlussabschnitt angeordnet ist, der mit der Steuerspindel (81) vorzugsweise lösbar verbunden ist.

11. Sanitärarmatur mit einem Ventiloberteil nach einem der Ansprüche 1 bis 10.

## Claims

1. Valve upper part having a head piece, which is axially penetrated by a control spindle (81), via which a valve body arranged in the head piece (83) can be actuated and which is connected to an operating part comprising a handle (1), wherein the handle (1) is displaceable relative to the head piece (83) coaxially to the control spindle (81), wherein the handle (1) is connected to the control spindle (81) via an adapter piece (2) fastened to it in a rotationally fixed manner, wherein the adapter piece (2) has an internal thread (24), which is in engagement with an external thread of the control spindle or a component connected to the control spindle (81) and via which its axial relative position with respect to the control spindle (81) is variable by rotation, **characterised in that** the handle (1) of the operating part has an adjusting sleeve (14), in which the adapter piece (2) is arranged and connected thereto in a rotationally fixed manner, wherein the adapter piece (2) is held in the adjusting sleeve (14) of the handle (1) in a rotationally fixed as well as longitudinally displaceable manner and wherein the adapter piece (2) has latching lugs (23), wherein at least one latching groove (16, 17) is arranged on the inside of the adjusting sleeve (14), with which the latching lugs (23) can latch in a defined position of the adapter piece (2) in the adjusting sleeve (14).

2. Valve upper part according to claim 1, **characterised in that**, when the external thread (33) is in engagement with a component connected to the control spindle (81), the internal thread (24) of the adapter piece (2) is in engagement with an external thread (33) arranged on a control cylinder (3), which receives a control piston (5) connected to the control spindle (81).

3. Valve upper part according to one of the preceding claims, **characterised in that** the handle can be fixed in at least two axial positions via an arranged locking device.

4. Valve upper part according to claims 2 and 3, **characterised in that** the locking device is arranged in the operating part and comprises the control piston (5), which is axially displaceably guided in the control cylinder (3), wherein the control cylinder (3) has a control cam (52), into which an engagement part arranged on the control cylinder (3) engages.

5. Valve upper part according to claim 4, **characterised in that** the engagement part is formed by a ball (38), which is radially movably guided in the control cylinder (3).

6. Valve upper part according to one of claims 2, 4 or 5, or claim 3 if it is dependent on claim 2, **characterised in that** the adjusting sleeve (14) at least partially surrounds the control piston (5).

7. Valve upper part according to one of claims 2, 4, 5 or 6, or claim 3 if it is dependent on claim 2, **characterised in that** a spring (59) is arranged between the control cylinder (3) and the control piston (5), which is pretensioned against the control cylinder (3).

8. Valve upper part according to claim 2, 4, 5, 6 or 7, or claim 3 if it is dependent on claim 2, **characterised in that** the adjusting sleeve (14) has an internal toothing (18), which engages with an external toothing (63) arranged on the control piston (5), whereby the handle (1) is displaceably guided along the control piston (5).

9. Valve upper part according to one of the preceding claims, **characterised in that** two latching grooves (16, 17) are arranged inside the adjusting sleeve (14) at an axial distance from one another, preferably extending circumferentially in the radial direction.

10. Valve upper part according to one of claims 2, 4, 5, 6, 7 or 8, or claim 3 if it is dependent on claim 2, or claim 9 if it is dependent on at least one of claims 2, 4, 5, 6, 7 or 8, **characterised in that** the control spindle (81) has a non-circular connecting section, wherein a receptacle (54) is arranged on the control piston (5) for form-fitting engagement with said non-circular connecting section, which is preferably detachably connected to the control spindle (81).

11. Sanitary fitting with a valve upper part according to any one of claims 1 to 10.

## Revendications

1. Partie supérieure de soupape avec une pièce têtière traversée axialement par une broche de commande (81) via laquelle il est possible d'actionner un corps de soupape disposé dans la pièce têtière (83), et qui est reliée à un organe de commande comprenant une poignée (1), sachant que la poignée (1) est déplaçable, relativement à la pièce têtière (83), coaxialement à la broche de commande (81), sachant que la poignée (1) est reliée à la broche de commande (81) via un adaptateur (2) fixé contre la première sans pouvoir tourner, sachant que l'adaptateur (2) présente un filetage intérieur (24) qui engrène dans un filetage extérieur de la broche de commande ou dans un composant relié avec la broche de commande (81), et via lequel sa position axiale relativement à la broche de commande (81) est modifiable par rotation, **caractérisée en ce que** la poignée (1) de l'organe de commande présente une douille d'ajustement (14) dans laquelle l'adaptateur (2) est disposé et relié à cette dernière sans pouvoir tourner, sachant que l'adaptateur (2) est maintenu dans la douille d'ajustement (14) de la poignée (1) sans pouvoir tourner ainsi que déplaçable longitudinalement, et sachant que l'adaptateur (2) présente des saillies (23) de crantage, sachant qu'à l'intérieur dans la douille d'ajustement (14) est disposée au moins une gorge de crantage (16, 17) avec laquelle les saillies de crantage (23) peuvent encranter, sur une position définie de l'adaptateur (2), dans la douille d'ajustement (14).

2. Partie supérieure de soupape selon la revendication 1, **caractérisée en ce que**, lorsque le filetage extérieur (33) engrène dans un composant relié à la broche de commande (81), le filetage intérieur (24) de l'adaptateur (2) engrène dans un filetage extérieur (33) disposé contre un cylindre de commande (3) qui reçoit un piston de commande (5) relié avec la broche de commande (81).

3. Partie supérieure de soupape selon l'une des revendications précédentes, **caractérisée en ce que** la poignée est immobilisable sur au moins deux positions axiales via un dispositif de retenue.

4. Partie supérieure de soupape selon les revendications 2 et 3, **caractérisée en ce que** le dispositif de retenue est disposé dans l'organe de commande et comprend le piston de commande (5) guidé coulissant axialement dans le cylindre de commande (3), sachant que le cylindre de commande (3) présente une coulisse de commande (52) dans laquelle engrène une pièce d'engrènement disposée contre le cylindre de commande (3).

5. Partie supérieure de soupape selon la revendication 4, **caractérisée en ce que** la pièce d'engrènement est formée par une bille (38) guidée de façon à se déplacer radialement dans le cylindre de commande (3).

6. Partie supérieure de soupape selon l'une des revendications 2, 4 ou 5, ou selon la revendication 3 si celle-ci dépend de la revendication 2, **caractérisée en ce que** la douille d'ajustement (14) entoure au moins localement le piston de commande (5).

7. Partie supérieure de soupape selon l'une des revendications 2, 4, 5 ou 6, ou selon la revendication 3 si celle-ci dépend de la revendication 2, **caractérisée en ce qu'**entre le cylindre de commande (3) et le piston de commande (5) est disposé un ressort (59) qui est précontraint contre le cylindre de commande (3).

8. Partie supérieure de soupape selon l'une des revendications 2, 4, 5, 6 ou 7, ou selon la revendication 3 si celle-ci dépend de la revendication 2, **caractérisée en ce que** la douille d'ajustement (14) présente une denture intérieure (18) qui engrène dans une denture extérieure (63) disposée contre le piston de commande (5), faisant que la poignée (1) est guidée coulissante, axialement, le long du piston de commande (5).

9. Partie supérieure de soupape selon l'une des revendications précédentes, **caractérisée en ce qu'**à l'intérieur de la douille d'ajustement (14) sont disposées, mutuellement distantes axialement, deux gorges de crantage (16, 17) de préférence périphériques radialement.

10. Partie supérieure de soupape selon l'une des revendications 2, 4, 5, 6, 7 ou 8, ou selon la revendication 3 si celle-ci dépend de la revendication 2, ou selon la revendication 9 si celle-ci dépend au moins de l'une des revendications 2, 4, 5, 6, 7 ou 8, **caractérisée en ce que** la broche de commande (81) présente un segment de raccordement non circulaire, sachant que contre le piston de commande (5) est disposé un logement (54) pour établir une jonction par adhérence de formes avec ce segment de raccordement non circulaire qui est relié de préférence détachable avec la broche de commande (81).

11. Robinetterie sanitaire avec une partie supérieure de soupape selon l'une des revendications 1 à 10.
